(19) Europäisches Patentamt
European Patent Office
Office européen des brevets

(11) EP 3 927 760 B1

(12) **EUROPEAN PATENT SPECIFICATION**

(45) Date of publication and mention of the grant of the patent:
**16.10.2024 Bulletin 2024/42**

(21) Application number: **20705211.9**

(22) Date of filing: **19.02.2020**

(51) International Patent Classification (IPC):
***C08G 69/26*** *(2006.01)* ***C08G 69/36*** *(2006.01)*

(52) Cooperative Patent Classification (CPC):
**C08G 69/26; C08G 69/265; C08G 69/36**

(86) International application number:
**PCT/EP2020/054367**

(87) International publication number:
**WO 2020/169670 (27.08.2020 Gazette 2020/35)**

(54) **MOBILE ELECTRONIC DEVICE ARTICLE OR COMPONENT COMPRISING A POLYAMIDE**

ARTIKEL ODER KOMPONENTE MIT EINEM POLYAMID EINER MOBILEN ELEKTRONISCHEN VORRICHTUNG

ARTICLE DE DISPOSITIF ÉLECTRONIQUE MOBILE OU COMPOSANT COMPRENANT UN POLYAMIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.02.2019 US 201962807426 P**
**02.05.2019 EP 19172335**

(43) Date of publication of application:
**29.12.2021 Bulletin 2021/52**

(73) Proprietor: **Solvay Specialty Polymers USA, LLC.**
**Alpharetta, GA 30005-3914 (US)**

(72) Inventors:
- **JEOL, Stéphane**
  **Cumming, GA 30041 (US)**
- **FLORES, Joel**
  **Alpharetta, GA 30004 (US)**

(74) Representative: **Ferri, Isabella**
**SYENSQO S.A.**
**Viale Lombardia, 20**
**20021 Bollate (MI) (IT)**

(56) References cited:
**US-A1- 2010 062 272**

- **KAZUO SAOTOME AND HIROSHI KOMOTO: "Polyamides having long methylene chain units", JOURNAL OF POLYMER SCIENCE PART A: POLYMER CHEMISTRY, JOHN WILEY & SONS, INC, US, vol. 4, no. 6, 1 June 1966 (1966-06-01), pages 1463 - 1473, XP009177874, ISSN: 0887-624X, [retrieved on 20030510], DOI: 10.1002/POL.1966.150040611**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to a mobile electronic device article or component comprising at least one polyamide (PA) comprising recurring units ($R_{PA}$) according to formula (I):

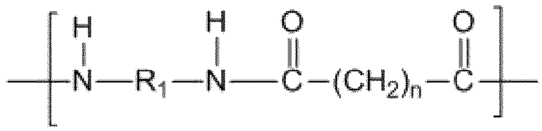

(I)

wherein

n equals 16, and
$R_1$ is p-xylylene.

### Background Art

Due to their reduced weight and high mechanical performance, polymer compositions are widely used to manufacture mobile electronic device components. There is now a high demand from the market for polymer compositions to be used to manufacture mobile electronic device components having improved dielectric performances (i.e. low dielectric constants and dissipation factor).

In mobile electronic devices, the material forming the various components and housing can significantly degrade wireless radio signals (e.g. 1MHz, 2.4 GHz and 5.0 GHz frequencies) transmitted and received by the mobile electronic device through one or more antennas. The dielectric performances of the material to be used in mobile electronic devices can be determined by measuring the dielectric constant as it represents the ability of the material to interact with the electromagnetic radiation and disrupt electromagnetic signals (e.g. radio signals) travelling through the material. Accordingly, the lower the dielectric constant of a material at a given frequency, the less the material disrupts the electromagnetic signal at that frequency.

The Applicant has identified a new class of polyamides having improved dielectric performances, which make them notably well-suited as materials for mobile electronic device components.

These polyamides derive from p-xylylene diamine, and one long chain aliphatic dicarboxylic acid $HOOC\text{-}(CH_2)_{16}\text{-}COOH$.

The article from Kazuo Saotone and Hiroshi Komoto (Journal of Polymer Science, Vol 5, 107-117, 1967) describes the preparation of N-Alkylsubstituted polyamides and copolyamides from N,N'-dialkyl p-xylylenediamines and N,N'-dialkyl hexamethylene diamine (in which the alkyl is specifically methyl or ethyl) with long chain aliphatic dicarboxylic acids. The article also describes the preparation of N-alkyl copolyamides which are found to be crystalline over the whole range of compositions.

The article from Heidecker et al. (Antec 2002, Vol 3, 3624-3628) relates to liquid crystalline polymers, obtained by blending various aliphatic and aromatic diamines with a ratio of 4,4-dimethyl bibenzoate and 1,18-octadecanedioic acid (C18 diacid).

The patent CA 2 565 483 (Degussa) describes the preparation of various semi-crystalline polyamides, starting from m-xylylenediamine, notably polyamide MXD14 and MXD18.

The patent application US 2010/062272 A1 notably describes a polyamide composition, which contains between 50-100 wt parts of a polyamide prepared using the following starting materials m-xylylenediamine and 1,18-octadecanedioic acid.

None of the above-listed documents describe however the use of the polyamide of the present invention and their advantageous properties as a component of a mobile electronic device.

### Summary of invention

The invention relates to a mobile electronic device article or component, comprising a polyamide (PA) comprising recurring units ($R_{PA}$) according to formula (I):

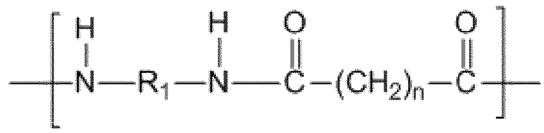

(I)

wherein

n equals 16, and
$R_1$ is *p*-xylylene, as defined in the appended claims.

Preferably, the polyamide (PA) is the condensation product of a mixture comprising :

- at least one diamine component which contains p-xylylene diamine, and
- at least one dicarboxylic acid component which contains $HOOC-(CH_2)_{16-}COOH$, or derivatives thereof, more preferably the dicarboxylic acid is the 1,18-octadecanedioic acid.

The article or component of the invention is made of a polyamide (PA) or a composition (C) having a dielectric constant $\varepsilon$ at 2.4 GHz of less than 3.0, as measured according to ASTM D2520 (2.4 GHz), and/or a dissipation factor (Df) at 2.4 GHz of less than 0.010, as measured according to ASTM D2520 (2.4 GHz).
The article may for example be selected in the group consisting of mobile phone, a personal digital assistant, a laptop computer, a tablet computer, a wearable computing device, a camera, a portable audio player, a portable radio, a global position system receiver, and a portable game console.

Disclosure of the invention

Described herein are polyamides (PA), for example derived from p-xylylene diamine (PXD), and at least dicarboxylic acid $HOOC-(CH_2)_{16}-COOH$, , as well as polyamide compositions (C), including this polyamide and, optionally reinforcing fillers and one or more additives. The polyamides (PA) have a low dielectric constant $\varepsilon$ (high dielectric performance) and are therefore well-suited as materials for mobile electronic device articles or components.
The polyamides (PA) described herein also have good mechanical performances (e.g. tensile modulus, GPa; tensile strength, MPa; tensile elongation at break) and a low susceptibility to atmospheric moisture.
According to an embodiment, the polyamide (PA) or polyamide composition (C) has a dielectric constant $\varepsilon$ at 2.4 GHz of less than 3.0, preferably less than 2.9 or less than 2.8, as measured as measured according to ASTM D2520 (2.4 GHz).
The polyamide (PA) described herein comprises recurring units ($R_{PA}$) of formula (I):

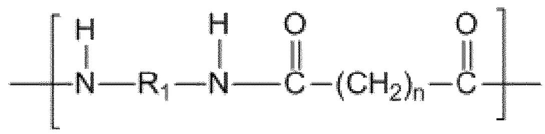

(I)

wherein

n vequals 16, and
$R_1$ is p-xylylene (PX).

The polyamide (PA) described herein may be a polyamide consisting essentially in recurring units ($R_{PA}$) or a copolyamide (PA) comprising recurring units ($R_{PA}$). More precisely, the expression "copolyamide" is hereby used for designating copolyamides comprising recurring units ($R_{PA}$) derived from PXD, and at least dicarboxylic acid $HOOC-(CH_2)_{16}-COOH$, , as well as recurring units ($R_{PA}$*), distinct from recurring units ($R_{PA}$).
According to an embodiment, the polyamide (PA) consists essentially in recurring units ($R_{PA}$) of formula (I), for example derived from p-xylylene diamine (PXD) and 1,18-octadecanedioic acid.
When the polyamide (PA) comprises recurring units ($R_{PA}$*), the recurring units ($R_{PA}$*) may be of formula (II) and/or (III):

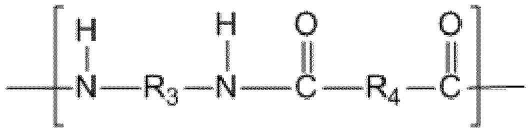

(II)

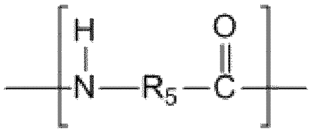

(III)

wherein

$R_3$ is selected from the group consisting of a bond, a $C_1$-$C_{15}$ alkyl and a $C_6$-$C_{30}$ aryl, optionally comprising one or more heteroatoms (e.g. O, N or S) and optionally substituted with one or more substituents selected from the group consisting of halogen (e.g. fluorine, chlorine, bromine or iodine), hydroxy (-OH), sulfo (-$SO_3M$) (e.g. wherein M is H, Na, K, Li, Ag, Zn, Mg or Ca), $C_1$-$C_6$ alkoxy, $C_1$-$C_6$ alkylthio, $C_1$-$C_6$ acyl, formyl, cyano, $C_6$-$C_{15}$ aryloxy and $C_6$-$C_{15}$ aryl;

$R_4$ is selected from the group consisting of a $C_1$-$C_{20}$ alkyl and a $C_6$-$C_{30}$ aryl, optionally comprising one or more heteroatoms (e.g. O, N or S) and optionally substituted with one or more substituents selected from the group consisting of halogen (e.g. fluorine, chlorine, bromine or iodine), hydroxy (-OH), sulfo (-$SO_3M$) (e.g. wherein M is H, Na, K, Li, Ag, Zn, Mg or Ca), $C_1$-$C_6$ alkoxy, $C_1$-$C_6$ alkylthio, $C_1$-$C_6$ acyl, formyl, cyano, $C_6$-$C_{15}$ aryloxy and $C_6$-$C_{15}$ aryl; and

$R_5$ is selected from the group consisting of a linear or branched $C_2$-$C_{14}$ alkyl, optionally comprising one or more heteroatoms (e.g. O, N and S) and optionally substituted with one or more substituents selected from the group consisting of halogen (e.g. fluorine, chlorine, bromine and iodine), hydroxy (-OH), sulfo (-$SO_3M$) (e.g. wherein M is H, Na, K, Li, Ag, Zn, Mg or Ca), $C_1$-$C_6$ alkoxy, $C_1$-$C_6$ alkylthio, $C_1$-$C_6$ acyl, formyl, cyano, $C_6$-$C_{15}$ aryloxy and $C_6$-$C_{15}$ aryl.

The polyamide (PA) described herein may be of formula (IV):

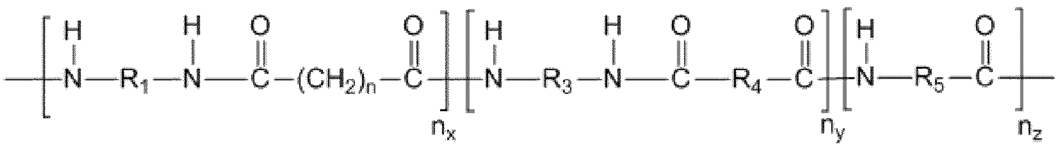

(IV)

wherein

$n_x$, $n_y$ and $n_z$ are respectively the moles % of each recurring units x, y and z;
recurring units x, y and z are arranged in blocks, in alternation or randomly;

$$n_x + n_y + n_z = 100;$$

$$5 \leq n_x \leq 100;$$

$R_1$, $R_3$, $R_4$ and $R_5$ being as described above.

The polyamides (PA) described herein may have a number average molecular weight Mn ranging from 1,000 g/mol to 40,000 g/mol, for example from 2,000 g/mol to 35,000 g/mol or from 4,000 to 30,000 g/mol. The number average

molecular weight Mn can be determined by gel permeation chromatography (GPC) using ASTM D5296 with polystyrene standards.

In the polyamide (PA) described herein, the recurring unit y may be aliphatic or aromatic. For the purpose of the present invention, the expression "aromatic recurring unit" is intended to denote any recurring unit that comprises at least one aromatic group. The aromatic recurring units may be formed by the polycondensation of at least one aromatic dicarboxylic acid with an aliphatic diamine or by the polycondensation of at least one aliphatic dicarboxylic acid with an aromatic diamine, or by the polycondensation of aromatic aminocarboxylic acids. For the purpose of the present invention, a dicarboxylic acid or a diamine is considered as "aromatic" when it comprises one or more than one aromatic group.

In the polyamide (PA) described herein, the recurring unit z is aliphatic and $R_5$ is a linear or branched $C_2$-$C_{14}$ alkyl, optionally comprising one or more heteroatoms (e.g. O, N and S) and optionally substituted with one or more substituents selected from the group consisting of halogen, hydroxy, sulfo, $C_1$-$C_6$ alkoxy, $C_1$-$C_6$ alkylthio, $C_1$-$C_6$ acyl, formyl, cyano, $C_6$-$C_{15}$ aryloxy and $C_6$-$C_{15}$ aryl.

The polyamide (PA) described herein may be composed of recurring units x and y, or of recurring units x and z, or of recurring units x, y and z. Recurring units x, y and z are arranged in blocks, in alternation or randomly.

Throughout this document, all temperatures are given in degrees Celsius (°C).

Unless specifically limited otherwise, the term "alkyl", as well as derivative terms such as "alkoxy", "acyl" and "alkylthio", as used herein, include within their scope straight chain, branched chain and cyclic moieties. Examples of alkyl groups are methyl, ethyl, 1-methylethyl, propyl, 1,1-dimethylethyl, and cyclo-propyl. Unless specifically stated otherwise, each alkyl and aryl group may be unsubstituted or substituted with one or more substituents selected from but not limited to halogen, hydroxy, sulfo, $C_1$-$C_6$ alkoxy,$C_1$-$C_6$ alkylthio, $C_1$-$C_6$ acyl, formyl, cyano, $C_6$-$C_{15}$ aryloxy or $C_6$-$C_{15}$ aryl, provided that the substituents are sterically compatible and the rules of chemical bonding and strain energy are satisfied. The term "halogen" or "halo" includes fluorine, chlorine, bromine and iodine, with fluorine being preferred.

The term "aryl" refers to a phenyl, indanyl or naphthyl group. The aryl group may comprise one or more alkyl groups, and are called sometimes in this case "alkylaryl"; for example may be composed of a cycloaromatic group and two $C_1$-$C_6$ groups (e.g. methyl or ethyl). The aryl group may also comprise one or more heteroatoms, e.g. N, O or S, and are called sometimes in this case "heteroaryl" group; these heteroaromatic rings may be fused to other aromatic systems. Such heteroaromatic rings include, but are not limited to furanyl, thienyl, pyrrolyl, pyrazolyl, imidazolyl, triazolyl, isoxazolyl, oxazolyl, thiazolyl, isothiazolyl, pyridyl, pyridazyl, pyrimidyl, pyrazinyl and triazinyl ring structures. The aryl or heteroaryl substituents may be unsubstituted or substituted with one or more substituents selected from but not limited to halogen, hydroxy, $C_1$-$C_6$ alkoxy, sulfo, $C_1$-$C_6$ alkylthio, $C_1$-$C_6$ acyl, formyl, cyano, $C_6$-$C_{15}$ aryloxy or $C_6$-$C_{15}$ aryl, provided that the substituents are sterically compatible and the rules of chemical bonding and strain energy are satisfied.

According to an embodiment, the polyamide (PA) described herein is the condensation product of a mixture comprising:

- at least one diamine component which comprises at least 50 mol.% PXD, at least 55 mol.%, at least 60 mol.%, at least 65 mol.%, at least 70 mol.%, at least 75 mol.%, at least 80 mol.%, at least 85 mol.%, at least 90 mol.%, at least 95 mol.% or at least 98 mol.% of PXD), and
- at least one dicarboxylic acid component which comprises at least 50 mol.% of $HOOC-(CH_2)_{16}-COOH$, or derivative thereof, at least 55 mol.%, at least 60 mol.%, at least 65 mol.%, at least 70 mol.%, at least 75 mol.%, at least 80 mol.%, at least 85 mol.%, at least 90 mol.%, at least 95 mol.% or at least 98 mol.% of $HOOC-(CH_2)_{16}-COOH$).

According to an embodiment, the polyamide (PA) described herein is the condensation product of a mixture comprising at least one of the components selected from the group consisting of :

- at least one dicarboxylic acid component (also called hereby diacid) or derivative thereof, and at least one diamine component,
- at least one aminocarboxylic acid, and
- at least one lactam.

The polyamide (PA) of the present invention comprises at least 50 mol.% of recurring units ($R_{PA}$), derived from PXD, and at least one dicarboxylic acid $HOOC-(CH_2)_{16}-COOH$, about 55 mol. %, at least about 60 mol. %, at least about 65 mol. %, at least about 70 mol. %, at least about 75 mol. %, at least about 80 mol. %, at least about 85 mol. %, at least about 90 mol. %, at least about 95 mol. % or at least about 98 mol. %.

The polyamide (PA) described herein may be a polyamide consisting essentially in recurring units ($R_{PA}$). In such case, the polyamide comprises less than 2 mol.% of recurring units distinct from recurring units ($R_{PA}$), for example less than 1 mol. %, less than 0.5 mol.% or even less than 0.1 mol.% of recurring units distinct from recurring units ($R_{PA}$).

The expression "at least" is hereby intended to denote "equals to or more than". For example, the expression "at least 5 mol. % of recurring units ($R_{PA}$)" hereby denotes that the polyamide (PA) may comprise 5 mol. % of recurring

units ($R_{PA}$) or more than 5 mol. % of recurring units ($R_{PA}$). The expression "at least" therefore corresponds to the mathematical symbol "≥" in the context of the present invention.

The expression "less than" corresponds to the mathematical symbol "<" in the context of the present invention. For example, the expression "less than 100 mol. % of recurring units ($R_{PA}$)" hereby denotes that the polyamide comprises strictly less than 100 mol. % of recurring units ($R_{PA}$) and therefore qualify as a copolyamide, made from recurring units ($R_{PA}$) and at least one another recurring unit ($R_{PA}$*).

According to this embodiment, the dicarboxylic acid component can be chosen among a large variety of aliphatic or aromatic components comprising at least two acidic moieties -COOH. According to this embodiment, the diamine component can be chosen among a large variety of aliphatic or aromatic components comprising at least two amine moieties $-NH_2$.

The expression "derivative thereof' when used in combination with the expression "dicarboxylic acid" is intended to denote whichever derivative which is susceptible of reacting in polycondensation conditions to yield an amide bond. Examples of amide-forming derivatives include a mono- or dialkyl ester, such as a mono- or di-methyl, ethyl or propyl ester, of such carboxylic acid; a mono- or di-aryl ester thereof; a mono- or di-acid halide thereof; a carboxylic anhydride thereof and a mono-or di-acid amide thereof, a mono- or di-carboxylate salt.

Non limitative examples of aliphatic dicarboxylic acids are notably oxalic acid (HOOC-COOH), malonic acid ($HOOC-CH_2-COOH$), succinic acid [$HOOC-(CH_2)_2-COOH$], glutaric acid [$HOOC-(CH_2)_3-COOH$], 2,2-dimethyl-glutaric acid [$HOOC-C(CH_3)_2-(CH_2)_2-COOH$], adipic acid [$HOOC-(CH_2)_4-COOH$], 2,4,4-trimethyl-adipic acid [$HOOC-CH(CH_3)-CH_2-C(CH_3)_2-CH_2-COOH$], pimelic acid [$HOOC-(CH_2)_5-COOH$], suberic acid [$HOOC-(CH_2)_6-COOH$], azelaic acid [$HOOC-(CH_2)_7-COOH$], sebacic acid [$HOOC-(CH_2)_8-COOH$], undecanedioic acid [$HOOC-(CH_2)_9-COOH$], dodecandioic acid [$HOOC-(CH_2)_{10}-COOH$], tridecanedioic acid [$HOOC-(CH_2)_{11}-COOH$], tetradecanedioic acid [$HOOC-(CH_2)_{12}-COOH$], pentadecanedioic acid [$HOOC-(CH_2)_{13}-COOH$], hexadecanedioic acid [$HOOC-(CH_2)_{14}-COOH$], octadecanedioic acid [$HOOC-(CH_2)_{16}-COOH$]. Included in this category are also cycloaliphatic dicarboxylic acid such as 1,4-cyclohexane dicarboxylic acid and 1,3-cyclohexanedicarboxylic acid.

Non limitative examples of aromatic diacids are notably phthalic acids, including isophthalic acid (IPA), terephthalic acid (TPA), naphthalendicarboxylic acids (e.g. naphthalene-2,6-dicarboxylic acid), 4,4'-bibenzoic acid, 2,5-pyridinedicarboxylic acid, 2,4-pyridinedicarboxylic acid, 3,5-pyridinedicarboxylic acid, 2,2-bis(4-carboxyphenyl)propane, bis(4-carboxyphenyl)methane, 2,2-bis(4-carboxyphenyl)hexafluoropropane, 2,2-bis(4-carboxyphenyl)ketone, 4,4'-bis(4-carboxyphenyl)sulfone, 2,2-bis(3-carboxyphenyl)propane, bis(3-carboxyphenyl)methane, 2,2-bis(3-carboxyphenyl)hexafluoropropane, 2,2-bis(3-carboxyphenyl)ketone, bis(3-carboxyphenoxy)benzene.

Non limitative examples of aromatic diamines ($NN_{ar}$) are notably *m*-phenylene diamine (MPD), p-phenylene diamine (PPD), 3,4'-diaminodiphenyl ether (3,4'-ODA) and 4,4'-diaminodiphenyl ether (4,4'-ODA).

Non limitative examples of aliphatic diamines ($NN_{al}$) are notably 1,2-diaminoethane, 1,2-diaminopropane, propylene-1,3-diamine, 1,3-diaminobutane, 1,4-diaminobutane (putrescine), 1,5-diaminopentane (cadaverine), 2-methyl-1,5-diaminopentane, hexamethylenediamine (or 1,6-diaminohexane), 3-methylhexamethylenediamine, 2,5-dimethylhexamethylenediamine, 2,2,4-trimethyl-hexamethylenediamine, 2,4,4-trimethyl-hexamethylenediamine, 1,7-diaminoheptane, 1,8-diaminooctane, 2,2,7,7-tetramethyloctamethylenediamine, 1,9-diaminononane, 2-methyl-1,8-diaminooctane, 5-methyl-1,9-diaminononane, 1,10-diaminodecane, 1,11-diaminoundecane, 1,12 diaminododecane, 1,13 diaminotridecane, 2,5-diamonotetrahydrofurane and N,N-Bis(3-aminopropyl)methylamine. Included in this category are also cycloaliphatic diamine such as isophorone diamine, 1,3-diaminocyclohexane, 1,4-diaminocyclohexane, bis-p-aminocyclohexylmethane, 1,3-bis(aminomethyl)cyclohexane, 1,4-bis(aminomethyl)cyclohexane, 1,3-bis(methyl)cyclohexane, 1,4-bis(methyl)cyclohexane, bis(4-amino-3-methylcyclohexyl) methane (MACM) and bis(4-aminocyclohexyl)methane (MACM).

The aliphatic diamines ($NN_{al}$) can also be selected in the group of polyetherdiamines. The polyetherdiamines can be based on an ethoxylated (EO) backbone and/or on a propoxylated (PO) backbone and they can be ethylene-oxide terminated, propylene-oxide terminated or butylene-oxide terminated diamines. Such polyetherdiamines are for example sold under the trade name Jeffamine® and Elastamine® (Hunstman).

According to an embodiment, the polyamide (PA) described herein comprises at least one aminocarboxylic acid (recurring unit z), and/or at least one lactam (recurring unit z).

The aminocarboxylic acid may have from 3 to 15 carbon atoms, for example from 4 to 13 carbon atoms. According to an embodiment, the aminocarboxylic acid is selected from the group consisting of 6-aminohexanoic acid, 9-aminononanoic acid, 10-aminodecanoic acid, 11-aminoundecanoic acid, 12-aminododecanoic acid, 13-aminotridecanoic acid, 3-(aminomethyl)benzoic acid, 4-(aminomethyl)benzoic acid and mixture thereof.

The lactam may have from 3 to 15 carbon atoms, for example from 4 to 13 carbon atoms. According to an embodiment, the lactam is selected from the group consisting of caprolactam, laurolactam and mixture thereof.

According to an embodiment, the polyamide (PA) described herein is the condensation product of a mixture comprising :

- at least one diamine which is PXD,
- at least 50 mol. % of one dicarboxylic acid (DA) $HOOC-(CH_2)_{16}-COOH$, or derivative thereof,
- at least one additional dicarboxylic acid component, distinct from (DA), and
- at least one additional diamine component, distinct from PXD,
  wherein
- the additional dicarboxylic acid component is selected from the group consisting of adipic acid, azelaic acid, sebacic acid, dodecanedioic acid, 1,4-cyclohexanedioic acid, isophthalic acid, terephthalic acid, 2,6-naphthalene dicarboxylic acid, 4,4'-bibenzoic acid, 5-hydroxyisophthalic acid, 5-sulfophthalic acid, and mixture thereof, and
- the additional diamine component is selected from the group consisting of 1,4-diaminobutane, 1,5-diamonopentane, 2-methyl-1,5diaminopentane, hexamethylenediamine, 1,9-diaminononane, 2-methyl-1,8-diaminooctoane, 1,10-diaminedecane, 1,12-diaminododecane, $H_2N-(CH_2)_3-O-(CH_2)_2-O(CH_2)_3-NH_2$, 1,3-bis(methyl)cyclohexane, 1,4-bis(methyl)cyclohexane and mixture thereof.

According to another embodiment, the polyamide described herein is the condensation product of a mixture comprising :

- at least one diamine which is PXD, and
- at least 50 mol. % of one dicarboxylic acid (DA) $HOOC-(CH_2)_{16}-COOH$, or derivative thereof,
- at least one additional dicarboxylic acid component, distinct from (DA), and
- at least one additional diamine component, distinct from PXD,
  wherein
- the additional dicarboxylic acid component is selected from the group consisting of adipic acid, sebacic acid, terephthalic acid, isopthalic acid and mixture thereof, and
- the additional diamine component is selected from the group consisting of 1,5-diaminopentane, hexamethylenediamine, 1,10-decamethylene diamine and mixture thereof.

According to another embodiment, the polyamide (PA) described herein is the condensation product of a mixture comprising :

- at least one diamine which isPXD, and
- at least 5 mol. % of one dicarboxylic acid (DA) $HOOC-(CH_2)_{16}-COOH$, or derivative thereof,
- at least one lactam or aminoacid selected from the group consisting of caprolactam, laurolactam, 11-aminoundecanoic acid, 1,3-bis-(aminomethyl)benzoic acid and mixture thereof.

The polyamide (PA) described herein comprises at least 50 mol. % of recurring units ($R_{PA}$), for example at least 60 mol. %, at least 70 mol. %, at least 75 mol. % of recurring units ($R_{PA}$).

According to this embodiment, the polyamide ($R_{PA}$) is such that, in formula (IV):

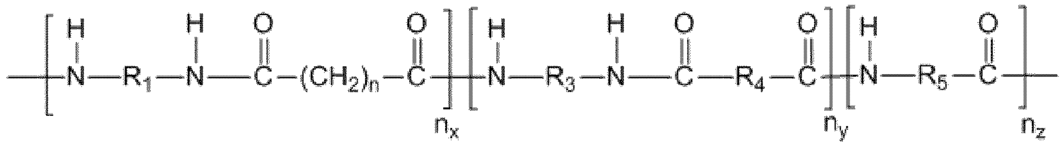

$$50 \leq n_x \leq 100,$$

$$60 \leq n_x \leq 100,$$

$$70 \leq n_x \leq 100$$

or

$$75 \leq n_x \leq 100.$$

The polyamide described herein may comprise less than 100 mol. % of recurring units ($R_{PA}$).

According to another preferred embodiment, the polyamide (PA) described herein comprises less than 99 mol. % of recurring units ($R_{PA}$), for example less than 98 mol. %, less than 97 mol. %, less than 96 mol. % of recurring units ($R_{PA}$).

According to this embodiment, the polyamide (PA) is such that, in formula (IV):

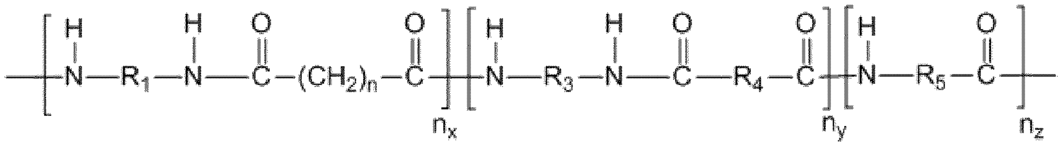

$$5 \leq n_x \leq 99,$$

$$5 \leq n_x \leq 98,$$

$$5 \leq n_x \leq 97$$

or

$$5 \leq n_x \leq 96.$$

$n_x$, $n_y$ and $n_z$ are respectively the moles % of each recurring units x, y and z. As an example of the different embodiments described herein, if the polyamide (PA) of the present invention is composed exclusively of recurring units x and y, then $n_x + n_y = 100$ and $n_z = 0$. In this case, the recurring unit y is composed of a diamine component and a diacid component; the number of moles of diamines and the number of moles of diacids to be added to the condensation reaction are equal. For example, if the polyamide is composed exclusively of PXD, and dicarboxylic acid (DA) $HOOC\text{-}(CH_2)_{16}\text{-}COOH$, , as well as terephthalic acid and hexamethylenediame, with $n_x$ = 60 mol. % and $n_y$ = 40 mol. %, then substantially the same number of moles of terephthalic acid and hexamethylenediamine should be added to the condensation mixture, that is to say 40 mol. %. The term "substantially" is hereby intended to denote that the ratio diacid/diamine varies between 0.9 to 1.1, for example between 0.95 and 1.05.

According to an embodiment, the polyamide (PA) described herein has a melting temperature (Tm) of at least about 160°C, as determined according to ASTM D3418, for example at least about 168°C, at least about 170°C.

According to an embodiment, the polyamide (PA) of the present invention has:

- a dielectric constant ε at 2.4 GHz of less than 3.0, preferably less than 2.9 or less than 2.8, as measured according to ASTM D2520 (2.4 GHz), and or
- a dissipation factor (Df) at 2.4 MHz of less than 0.010, preferably less than 0.0094 or less than 0.0093, as measured according to ASTM D2520 (2.4 GHz).

The polyamide (PA) described herein can be prepared by any conventional method adapted to the synthesis of polyamides and polyphthalamides.

Preferentially, the polyamide of the invention is prepared by reacting by heating the monomers in presence of less than 40 wt.% of water, preferentially less than 30 wt.%, less than 20 wt.%, less than 10 wt.%, preferentially with no added water, up to a temperature of at least Tm+10°C, Tm being the melting temperature of the polyamide.

The polyamide (PA) described herein can for example be prepared by thermal polycondensation of aqueous solution of monomers and comonomers. The copolyamides may contain a chain limiter, which is a monofunctional molecule capable of reacting with the amine or carboxylic acid moiety, and is used to control the molecular weight of the copolyamide. For example, the chain limiter can be acetic acid, propionic acid, benzoic acid and/or benzylamine. A catalyst can also be used. Examples of catalyst are phosphorous acid, ortho-phosphoric acid, meta-phosphoric acid, alkalimetal hypophosphite such as sodium hypophosphite and phenylphosphinic acid. A stabilizer, such as a phosphite, may also be used.

The polyamide (PA) described herein can also advantageously be prepared by a solvent-free process, that-is-to-say a process conducted in the melt, in the absence of a solvent. When the condensation is solvent-free, the reaction can be carried out in equipment made from materials inert toward the monomers. In this case, the equipment is chosen

in order to provide enough contact of the monomers, and in which the removal of volatile reaction products is feasible. Suitable equipment includes agitated reactors, extruders and kneaders.

The polyamides described herein are present in the composition (C) in a total amount of greater than 30 wt. %, greater than 35 wt. % by weight, greater than 40 wt. % or greater than 45 wt. %, based on the total weight of the polymer composition (C).

The polyamides may be present in the composition (C) in a total amount of less than 99.95 wt. %, less than 99%, less than 95%, less than 90%, less than 80 wt. %, less than 70 wt. % or less than 60 wt. %, based on the total weight of the polymer composition (C).

The polyamides may for example be present in the composition (C) in an amount ranging between 35 and 60 wt. %, for example between 40 and 55 wt. %, based on the total weight of the polyamide composition (C).

The composition (C) may also comprise one component selected from the group consisting of reinforcing agents, tougheners, plasticizers, colorants, pigments, antistatic agents, dyes, lubricants, thermal stabilizers, light stabilizers, flame retardants, nucleating agents and antioxidants.

A large selection of reinforcing agents, also called reinforcing fibers or fillers, may be added to the composition according to the present invention. They can be selected from fibrous and particulate reinforcing agents. A fibrous reinforcing filler is considered herein to be a material having length, width and thickness, wherein the average length is significantly larger than both the width and thickness. Generally, such a material has an aspect ratio, defined as the average ratio between the length and the largest of the width and thickness of at least 5, at least 10, at least 20 or at least 50.

The reinforcing filler may be selected from mineral fillers (such as talc, mica, kaolin, calcium carbonate, calcium silicate, magnesium carbonate), glass fibers, carbon fibers, synthetic polymeric fibers, aramid fibers, aluminum fibers, titanium fibers, magnesium fibers, boron carbide fibers, rock wool fibers, steel fibers and wollastonite.

Among fibrous fillers, glass fibers are preferred; they include chopped strand A-, E-, C-, D-, S- and R-glass fibers, as described in chapter 5.2.3, p. 43-48 of Additives for Plastics Handbook, 2nd edition, John Murphy. Preferably, the filler is chosen from fibrous fillers. It is more preferably a reinforcing fiber that is able to withstand the high temperature applications.

The reinforcing agents may be present in the composition (C) in a total amount of greater than 15 wt. %, greater than 20 wt. % by weight, greater than 25 wt. % or greater than 30 wt. %, based on the total weight of the polymer composition (C). The reinforcing agents may be present in the composition (C) in a total amount of less than 65 wt. %, less than 60 wt. %, less than 55 wt. % or less than 50 wt. %, based on the total weight of the polymer composition (C).

The reinforcing filler may for example be present in the composition (C) in an amount ranging between 20 and 60 wt. %, for example between 30 and 50 wt. %, based on the total weight of the polyamide composition (C).

The composition (C) of the present invention may also comprise a toughener. A toughener is generally a low glass transition temperature ($T_g$) polymer, with a $T_g$ for example below room temperature, below 0°C or even below -25°C. As a result of its low $T_g$, the toughener are typically elastomeric at room temperature. Tougheners can be functionalized polymer backbones.

The polymer backbone of the toughener can be selected from elastomeric backbones comprising polyethylenes and copolymers thereof, e.g. ethylene-butene; ethylene-octene; polypropylenes and copolymers thereof; polybutenes; polyisoprenes; ethylene-propylene-rubbers (EPR); ethylene-propylene-diene monomer rubbers (EPDM); ethylene-acrylate rubbers; butadiene-acrylonitrile rubbers, ethylene-acrylic acid (EAA), ethylenevinylacetate (EVA); acrylonitrile-butadiene-styrene rubbers (ABS), block copolymers styrene ethylene butadiene styrene (SEBS); block copolymers styrene butadiene styrene (SBS); core-shell elastomers of methacrylate-butadiene-styrene (MBS) type, or mixture of one or more of the above.

When the toughener is functionalized, the functionalization of the backbone can result from the copolymerization of monomers which include the functionalization or from the grafting of the polymer backbone with a further component.

Specific examples of functionalized tougheners are notably terpolymers of ethylene, acrylic ester and glycidyl methacrylate, copolymers of ethylene and butyl ester acrylate; copolymers of ethylene, butyl ester acrylate and glycidyl methacrylate; ethylene-maleic anhydride copolymers; EPR grafted with maleic anhydride; styrene copolymers grafted with maleic anhydride; SEBS copolymers grafted with maleic anhydride; styrene-acrylonitrile copolymers grafted with maleic anhydride; ABS copolymers grafted with maleic anhydride.

The toughener may be present in the composition (C) in a total amount of greater than 1 wt. %, greater than 2 wt. % or greater than 3 wt. %, based on the total weight of the composition (C). The toughener may be present in the composition (C) in a total amount of less than 30 wt. %, less than 20 wt. %, less than 15 wt. % or less than 10 wt. %, based on the total weight of the polymer composition (C).

The composition (C) may also comprise other conventional additives commonly used in the art, including plasticizers, colorants, pigments (e.g. black pigments such as carbon black and nigrosine), antistatic agents, dyes, lubricants (e.g. linear low density polyethylene, calcium or magnesium stearate or sodium montanate), thermal stabilizers, light stabilizers, flame retardants, nucleating agents and antioxidants.

The composition (C) may also comprise one or more other polymers, preferably polyamides different from the

polyamide (PA) of the present invention. Mention can be made notably of semi-crystalline or amorphous polyamides, such as aliphatic polyamides, semi-aromatic polyamides, and more generally the polyamides obtained by polycondensation between an aromatic or aliphatic saturated diacid and an aliphatic saturated or aromatic primary diamine, a lactam, an amino-acid or a mixture of these different monomers.

The polyamide composition (C) has:

- a dielectric constant (Dk) at 2.4 GHz of less than 3.0, preferably less than 2.9, preferably less than 2.8, as measured according to ASTM D2520 (2.4 GHz), and/or
- a dissipation factor (Df) at 2.4 MHz of less than 0.010, preferably less than 0.009, preferably less than 0.0089, as measured according to ASTM D2520 (2.4 GHz).

Preparation of the polyamide composition (C)

Also described herein is a method of making the composition (C) as above detailed, said method comprising melt-blending the polyamide (PA) and the specific components, e.g. a filler, a toughener, a stabilizer, and of any other optional additives.

Any melt-blending method may be used for mixing polymeric ingredients and non-polymeric ingredients in the context of the present invention. For example, polymeric ingredients and non-polymeric ingredients may be fed into a melt mixer, such as single screw extruder or twin screw extruder, agitator, single screw or twin screw kneader, or Banbury mixer, and the addition step may be addition of all ingredients at once or gradual addition in batches. When the polymeric ingredient and non-polymeric ingredient are gradually added in batches, a part of the polymeric ingredients and/or non-polymeric ingredients is first added, and then is melt-mixed with the remaining polymeric ingredients and non-polymeric ingredients that are subsequently added, until an adequately mixed composition is obtained. If a reinforcing agent presents a long physical shape (for example, a long glass fiber), drawing extrusion molding may be used to prepare a reinforced composition.

The present invention relates to articles comprising the polyamide (PA) described herein.

The article is used in mobile electronics. The article can, for example, be a mobile electronic device component. As used herein, a "mobile electronic device" refers to an electronic device that is intended to be conveniently transported and used in various locations. A mobile electronic device can include, but is not limited to, a mobile phone, a personal digital assistant ("PDA"), a laptop computer, a tablet computer, a wearable computing device (e.g., a smart watch, smart glasses and the like), a camera, a portable audio player, a portable radio, global position system receivers, and portable game consoles.

The mobile electronic device component may, for example, comprise a radio antenna and the composition (C). In this case, the radio antenna can be a WiFi antenna or an RFID antenna. The mobile electronic device component may also be an antenna housing.

In some embodiments, the mobile electronic device component is an antenna housing. In some such embodiments, at least a portion of the radio antenna is disposed on the polyamide composition (C). Additionally or alternatively, at least a portion of the radio antenna can be displaced from the polyamide composition (C). In some embodiments, the device component can be of a mounting component with mounting holes or other fastening device, including but not limited to, a snap fit connector between itself and another component of the mobile electronic device, including but not limited to, a circuit board, a microphone, a speaker, a display, a battery, a cover, a housing, an electrical or electronic connector, a hinge, a radio antenna, a switch, or a switchpad. In some embodiments, the mobile electronic device can be at least a portion of an input device.

## Examples

These examples demonstrate the thermal, dielectric and mechanical performances of several inventive or comparative polyamides.

### Raw Materials

PXD: *p*-xylylene diamine obtained from Aldrich
MXD: *m*-xylylene diamine obtained from Aldrich
HMD: hexamethylene diamine from Aldrich
C6: 1,6-hexanediamine, obtained from Aldrich
C18: 1,18-octadecanedioic acid, Inherent™C18, obtained from Elevance

**Polyamides preparation**

All of the polyamides exemplified below were prepared according to similar processes in an electrically-heated reactor equipped with an agitator and a distillate line equipped with a pressure regulation valve. Ex1 produced at the 50-g scale in a glass sleeve in a 300-ml Parr reactor. The reactor was charged with 16.84 g (121 mmol) PXD, 37.92 g (121 mmol) C18, 23 g water and 39.7 mg phosphorous acid (0.48 mmol). The reactor was heated to a temperature of 240°C and a pressure of 100 psig. Pressure was controlled by distillation at 100 psig and temperature increased to 280°C over a period of 50 minutes. Pressure was lowered to atmospheric over a span of 25 minutes as temperature was increased to 287°C. Atmospheric pressure was maintained for 10 minutes followed by a nitrogen sweep for 15 minutes. Product was removed from the cooled reactor as a creamy yellow plug attached to the agitator.

**Testing**

Thermal transitions (Tg, Tm)

The glass transition and melting temperatures of the various polyamides were measured using differential scanning calorimetry according to ASTM D3418 employing a heating and cooling rate of 20°C/min. Three scans were used for each DSC test: a first heat up to 340°C, followed by a first cool down to 30°C, followed by a second heat up to 350°C. The Tg and the Tm were determined from the second heat-up. The glass transition and melting temperatures are tabulated in Table 1 below.

**Table 1** - mol. %

| | **Ex 1** | **CEx2** | **CEx 3** | **CEx 4** |
|---|---|---|---|---|
| PXD | 100 | - | - | - |
| MXD | - | 100 | 100 | - |
| C18 | 100 | 100 | - | 100 |
| C6 | - | - | 100 | 100 |
| | Thermal properties | | | |
| Tg (°C) | Nd | Nd | 78 | Nd |
| Tm (°C) | 236 | 173 | 240 | 192 |

Compression Molding

The compression molding of 2" by 1/8" disks of the inventive and comparative disks was conducted with dried granulated polymer using a Carver 8393 Laboratory Press according to conditions described in Table 2 below.

**Table 2**

| | **Ex 1** | **CEx2** | **CEx 3** | **CEx4** |
|---|---|---|---|---|
| Molding Temperature (°C) | 285 | 210 | 270 | 220 |
| Pressure (psi) | 4500<br>6000<br>4500 | 4500<br>6000<br>4500 | 4500<br>6000<br>4500 | 4500<br>6000<br>4500 |
| Times (min) | 15<br>1<br>1 | 15<br>5<br>1 | 18<br>11 sec<br>1 | 15<br>5<br>1 |

Dielectric performances

The dielectric constant ε and dissipation factor Df were measured according to ASTM D2520. Measurements were taken with samples that were milled from the "dry-as-molded' compression molded discs to give, in each case, rectangular prisms of dimensions of 0.08 in. × 0.20 in. × 1.0 in.

**Table 3** - dielectric performances

| | | Ex 1 | CEx2 | CEx 3 | CEx4 |
|---|---|---|---|---|---|
| 2.4 GHz | ε | 2.76 | 2.77 | 3.26 | 2.66 |
| | Df | 0.0092 | 0.0095 | 0.011 | 0.0124 |

Mechanical properties

Dried, granulated-polymers were processed on the DSM Xplore® Microcompounder and mini injection system. Extruder barrel temperatures were set to 310°C and the melt temperature was maintained at 290°C. The melt was mixed at 100 rpm for 2 minutes and then extruded into a transfer wand that was maintained at 290°C and used to charge the mold. Mold temperature was set to 80°C. Type V tensile bars were tested according to ASTM D638 with a testing speed of 0.05"/min. Interestingly, polyamides from example 1 exhibit higher modulus and strength than Comparative examples 2 and 4.

**Table 4** - mechanical performances

| | Ex 1 | CEx2 | CEx4 |
|---|---|---|---|
| Tensile modulus, GPa | 1.86 | 1.83 | 1.53 |
| Tensile strength, MPa | 56 | 47 | 45 |

## Claims

1. A mobile electronic device article or component, being made of a composition (C) having a dielectric constant ε at 2.4 GHz of less than 3.0, as measured according to ASTM D2520 (2.4 GHz), and/or a dissipation factor (Df) at 2.4 GHz of less than 0.010, as measured according to ASTM D2520 (2.4 GHz) and comprising greater than 30 wt. % of a polyamide (PA), based on the total weight of the composition (C), said polyamide (PA) comprising at least 50 mol.%, based on the total number of moles in the polyamide (PA), of recurring units ($R_{PA}$) according to formula (I):

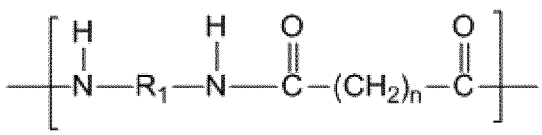

(I)

wherein

n equals 16, and
$R_1$ is *p*-xylylene.

2. The article or component of claim 1, wherein the polyamide (PA) comprises at least 75 mol.% of the recurring units ($R_{PA}$) according to formula (I), based on the total number of moles in the polyamide (PA).

3. The article or component of any one of claims 1-2, wherein the polyamide (PA) is the condensation product of a mixture comprising :

- at least one diamine which is *p*-xylylene diamine, and
- at least one dicarboxylic acid $HOOC-(CH_2)_{16}-COOH$, or derivatives thereof.

4. The article or component of claim 3, wherein the dicarboxylic acid is the 1,18-octadecanedioic acid.

5. The article or component of claim 3 or 4, wherein the condensation mixture further comprises at least one additional component selected from the group consisting of :

- at least one dicarboxylic acid component or derivative thereof, and at least one diamine component,
- at least one aminocarboxylic acid, and/or
- at least one lactam.

**6.** The article or component of claim 5, wherein:

- the dicarboxylic acid component is selected from the group consisting of adipic acid, azelaic acid, sebacic acid, 1,12-dodecanoic acid, isophthalic acid, terephthalic acid, 2,6-naphthalene dicarboxylic acid, 4,4'-bibenzoic acid, 5-hydroxyisophthalic acid, 5-sulfophthalic acid, and mixture thereof, and/or
- the diamine component is selected from the group consisting of 1,4-diaminobutane, 1,5-diamonopentane, 2-methyl-1,5-diaminopentane, hexamethylenediamine, 1,9-diaminononane, 2-methyl-1,8-diaminooctoane, 1,10-diaminedecane, 1,12-diaminododecane, $H_2N-(CH_2)_3-O-(CH_2)_2-O(CH_2)_3-NH_2$, bis(4-amino-3-methylcyclohexyl)methane (MACM), bis(4-aminocyclohexyl)methane (MACM), and mixture thereof.

**7.** The article or component of claim 5, wherein the lactam is selected from the group consisting of caprolactam, laurolactam and mixture thereof.

**8.** The article or component of any one of claims 1-7, wherein the polyamide (PA) has a dielectric constant ε at 2.4 GHz of less than 3.0, preferably less than 2.9 or less than 2.8, as measured according to ASTM D2520 (2.4 GHz).

**9.** The article or component of any one of claims 1-8, wherein the polyamide (PA) has a dissipation factor (Df) at 2.4 GHz of less than 0.010, preferably less than 0.0094 or less than 0.0093, as measured according to ASTM D2520 (2.4 GHz).

**10.** The article or component of any one of claims 1-9, further comprising at least one component selected from the group consisting of reinforcing agents, tougheners, plasticizers, colorants, pigments, antistatic agents, dyes, lubricants, thermal stabilizers, light stabilizers, flame retardants, nucleating agents and antioxidants.

**11.** The article or component of any one of claims 1-10, further comprising from 10 wt.% to 60 wt.% of glass fibers, based on the total weight of the composition (C).

**12.** The article or component of any one of claims 1-11, further comprising from 0.5 wt.% to 5 wt.% of pigment, dye or colorant selected from the group consisting of TiO2, carbon black, zinc sulfide, barium sulfate, zinc oxide, ferric oxide and any combination of one or more thereof, based on the total weight of the composition (C).

**13.** The article or component of any one of claims 1-12, comprising from 40 wt.% to 70 wt.% of the polyamide (PA), based on the total weight of the composition (C).

**14.** The article or component of any one of claims 1-13, selected from the group consisting of a mobile phone, a personal digital assistant, a laptop computer, a tablet computer, a wearable computing device, a camera, a portable audio player, a portable radio, a global position system receiver, and a portable game console.

**Patentansprüche**

**1.** Mobilelektronikvorrichtung-Gegenstand oder -Komponente, hergestellt aus einer Zusammensetzung (C) mit einer Dielektrizitätskonstante ε bei 2,4 GHz von kleiner als 3,0, wie gemessen gemäß ASTM D2520 (2,4 GHz), und/oder einem Dissipationsfaktor (Df) bei 2,4 GHz von kleiner als 0,010, wie gemessen gemäß ASTM D2520 (2,4 GHz), und umfassend mehr als 30 Gew.-% an einem Polyamid (PA) bezogen auf das Gesamtgewicht der Zusammensetzung (C), wobei das Polyamid (PA) wenigstens 50 mol-%, bezogen auf die Gesamtmolzahl in dem Polyamid (PA), an Wiederholungseinheiten ($R_{PA}$) gemäß Formel (I) umfasst:

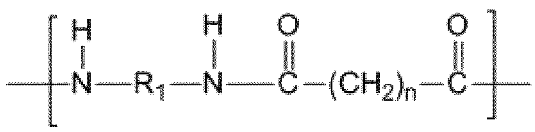

(I)

wobei

n gleich 16 ist und
$R_1$ *p*-Xylylen ist.

2. Gegenstand oder Komponente gemäß Anspruch 1, wobei das Polyamid (PA) wenigstens 75 mol-% an den Wiederholungseinheiten ($R_{PA}$) gemäß Formel (I) bezogen auf die Gesamtmolzahl in dem Polyamid (PA) umfasst.

3. Gegenstand oder Komponente gemäß einem der Ansprüche 1-2, wobei das Polyamid (PA) das Kondensationsprodukt eines Gemischs ist, das umfasst:

- wenigstens ein Diamin, das *p*-Xylylendiamin ist, und
- wenigstens eine Dicarbonsäure $HOOC-(CH_2)_{16}-COOH$ oder Derivate davon.

4. Gegenstand oder Komponente gemäß Anspruch 3, wobei die Dicarbonsäure 1,18-Octadecandisäure ist.

5. Gegenstand oder Komponente gemäß Anspruch 3 oder 4, wobei das Kondensationsgemisch ferner wenigstens eine zusätzliche Komponente umfasst, ausgewählt aus der Gruppe bestehend aus:

- wenigstens einer Dicarbonsäurekomponente oder einem Derivat davon und wenigstens einer Diaminkomponente,
- wenigstens einer Aminocarbonsäure und/oder
- wenigstens einem Lactam.

6. Gegenstand oder Komponente gemäß Anspruch 5, wobei:

- die Dicarbonsäurekomponente ausgewählt ist aus der Gruppe bestehend aus Adipinsäure, Azelainsäure, Sebacinsäure, 1,12-Dodecansäure, Isophthalsäure, Terephthalsäure, 2,6-Naphthalindicarbonsäure, 4,4'-Dibenzoesäure, 5-Hydroxyisophthalsäure, 5-Sulfophthalsäure und Gemischen davon, und/oder
- die Diaminkomponente ausgewählt ist aus der Gruppe bestehend aus 1,4-Diaminobutan, 1,5-Diaminopentan, 2-Methyl-1,5-diaminopentan, Hexamethylendiamin, 1,9-Diaminononan, 2-Methyl-1,8-diaminooctan, 1,10-Diaminodecan, 1,12-Diaminododecan, $H_2N-(CH_2)_3-O-(CH_2)_2-O(CH2)_3-NH_2$, Bis(4-amino-3-methylcyclohexyl)methan (MACM), Bis(4-aminocyclohexyl)methan (MACM) und Gemischen davon.

7. Gegenstand oder Komponente gemäß Anspruch 5, wobei das Lactam ausgewählt ist aus der Gruppe bestehend aus Caprolactam, Laurolactam und Gemischen davon.

8. Gegenstand oder Komponente gemäß einem der Ansprüche 1-7, wobei das Polyamid (PA) eine Dielektrizitätskonstante $\varepsilon$ bei 2,4 GHz von kleiner als 3,0, vorzugsweise kleiner als 2,9 oder kleiner als 2,8, wie gemessen gemäß ASTM D2520 (2,4 GHz), aufweist.

9. Gegenstand oder Komponente gemäß einem der Ansprüche 1-8, wobei das Polyamid (PA) einen Dissipationsfaktor (Df) bei 2,4 GHz von kleiner als 0,010, vorzugsweise kleiner als 0,0094 oder kleiner als 0,0093, wie gemessen gemäß ASTM D2520 (2,4 GHz), aufweist.

10. Gegenstand oder Komponente gemäß einem der Ansprüche 1-9, ferner umfassend wenigstens eine Komponente ausgewählt aus der Gruppe bestehend aus Verstärkungsmitteln, Zähmachern, Weichmachern, Farbmitteln, Pigmenten, antistatischen Mitteln, Farbstoffen, Schmiermitteln, Wärmestabilisatoren, Lichtstabilisatoren, Flammhemmern, Keimbildnern und Antioxidationsmitteln.

11. Gegenstand oder Komponente gemäß einem der Ansprüche 1-10, ferner umfassend von 10 Gew.-% bis 60 Gew.-% Glasfasern bezogen auf das Gesamtgewicht der Zusammensetzung (C).

12. Gegenstand oder Komponente gemäß einem der Ansprüche 1-11, ferner umfassend von 0,5 Gew.-% bis 5 Gew.-% Pigment, Farbstoff oder Farbmittel ausgewählt aus der Gruppe bestehend aus TiO2, Ruß, Zinksulfid, Bariumsulfat, Zinkoxid, Eisenoxid und einer beliebigen Kombination von einem oder mehreren davon, bezogen auf das Gesamtgewicht der Zusammensetzung (C).

**13.** Gegenstand oder Komponente gemäß einem der Ansprüche 1-12, umfassend von 40 Gew.-% bis 70 Gew.-% an dem Polyamid (PA) bezogen auf das Gesamtgewicht der Zusammensetzung (C).

**14.** Gegenstand oder Komponente gemäß einem der Ansprüche 1-13, ausgewählt aus der Gruppe bestehend aus einem Mobiltelephon, einem Personal Digital Assistant, einem Laptopcomputer, einem Tablet-Computer, einer tragbaren Computervorrichtung, einer Kamera, einem tragbaren Audioplayer, einem tragbaren Radio, einem Global-Position-System-Empfänger und einer tragbaren Spielkonsole.

**Revendications**

**1.** Article ou composant de dispositif électronique mobile, qui est composé d'une composition (C) ayant une constante diélectrique ε à 2,4 GHz inférieure à 3,0, comme mesurée selon la norme ASTM D2520 (2,4 GHz), et/ou un facteur de dissipation (Df) à 2,4 GHz inférieur à 0,010, comme mesuré selon la norme ASTM D2520 (2,4 GHz) et comprenant plus de 30% en poids d'un polyamide (PA) sur la base du poids total de la composition (C), ledit polyamide (PA) comprenant au moins 50 % en moles, sur la base du nombre total de moles dans le polyamide (PA), de motifs répétitifs ($R_{PA}$) selon la formule (I) :

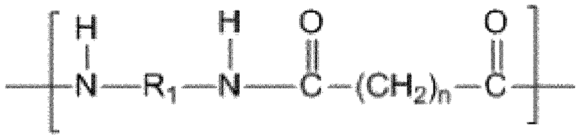

(I)

n étant égal à 16, et
$R_1$ étant *p*-xylylène.

**2.** Article ou composant selon la revendication 1, le polyamide (PA) comprenant au moins 75% en moles des motifs répétitifs ($R_{PA}$) selon la formule (I), sur la base du nombre total de moles dans le polyamide (PA) .

**3.** Article ou composant selon l'une quelconque des revendications 1 et 2, le polyamide (PA) étant le produit de condensation d'un mélange comprenant :

- au moins une diamine qui est la *p*-xylylène diamine, et
- au moins un acide dicarboxylique $HOOC-(CH_2)_{16}-COOH$. ou des dérivés correspondants.

**4.** Article ou composant selon la revendication 3, l'acide dicarboxylique étant l'acide 1,18-octadécanedioïque.

**5.** Article ou composant selon la revendication 3 ou 4, le mélange de condensation comprenant en outre au moins un composant supplémentaire choisi dans le groupe constitué par :

- au moins un composant acide dicarboxylique ou un dérivé correspondant, et au moins un composant diamine,
- au moins un acide aminocarboxylique, et/ou
- au moins un lactame.

**6.** Article ou composant selon la revendication 5,

- le composant acide dicarboxylique étant choisi dans le groupe constitué par l'acide adipique, l'acide azélaïque, l'acide sébacique, l'acide 1,12-dodécanoïque, l'acide isophtalique, l'acide téréphtalique, l'acide 2,6-naphtalène dicarboxylique, l'acide 4,4'-bibenzoïque, l'acide 5-hydroxyisophtalique, l'acide 5-sulfophtalique et des mélanges correspondants, et/ou
- le composant diamine étant choisi dans le groupe constitué par le 1,4-diaminobutane, le 1,5-diamonopentane, le 2-méthyl-1,5-diaminopentane, l'hexaméthylènediamine, le 1,9-diaminononane, le 2-méthyl-1,8-diaminooctoane, le 1,10-diaminedécane, le 1,12-diaminododécane, $H_2N-(CH_2)_3-O-(CH_2)_3-NH_2$, le bis(4-amino-3-méthylcyclohexyl)méthane (MACM), le bis(4-aminocyclohexyl)méthane (MACM), et des mélanges correspondants.

**7.** Article ou composant selon la revendication 5, le lactame étant choisi dans le groupe constitué par le caprolactame,

le laurolactame et un mélange correspondant.

8. Article ou composant selon l'une quelconque des revendications 1 à 7, le polyamide (PA) ayant une constante diélectrique ε à 2,4 GHz inférieure à 3,0, préférablement inférieure à 2,9 ou inférieure à 2,8, comme mesurée selon la norme ASTM D2520 (2,4 GHz).

9. Article ou composant selon l'une quelconque des revendications 1 à 8, le polyamide (PA) ayant un facteur de dissipation (Df) à 2,4 GHz inférieur à 0,010, préférablement inférieur à 0,0094 ou inférieur à 0,0093, comme mesuré selon la norme ASTM D2520 (2,4 GHz).

10. Article ou composant selon l'une quelconque des revendications 1 à 9, comprenant en outre au moins un composant choisi dans le groupe constitué par des agents de renforcement, des durcisseurs, des plastifiants, des matières colorantes, des pigments, des agents antistatiques, des colorants, des lubrifiants, des stabilisants thermiques, des photostabilisants, des agents ignifugeants, des agents de nucléation et des antioxydants.

11. Article ou composant selon l'une quelconque des revendications 1 à 10, comprenant en outre de 10% en poids à 60% en poids de fibre de verre, sur la base du poids total de la composition (C).

12. Article ou composant selon l'une quelconque des revendications 1 à 11, comprenant en outre de 0,5% en poids à 5% en poids de pigment, de colorant ou de matière colorante choisi(e) dans le groupe constitué par TiO2, le noir de carbone, le sulfure de zinc, le sulfate de baryum, l'oxyde de zinc, l'oxyde ferrique et une quelconque combinaison d'un ou plusieurs de ceux-ci, sur la base du poids total de la composition (C).

13. Article ou composant selon l'une quelconque des revendications 1 à 12, comprenant de 40% en poids à 70% en poids du polyamide (PA), sur la base du poids total de la composition (C).

14. Article ou composant selon l'une quelconque des revendications 1 à 13, choisi dans le groupe constitué par un téléphone mobile, un assistant numérique personnel, un ordinateur portable, un ordinateur de type tablette, un dispositif informatique portable, une caméra, un lecteur audio portable, une radio portable, un récepteur de système global de localisation, et une console de jeux portable.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CA 2565483, Degussa
- US 2010062272 A1


### Non-patent literature cited in the description


- **KAZUO SAOTONE ; HIROSHI KOMOTO.** *Journal of Polymer Science,* 1967, 107-117
- **HEIDECKER et al.** *Antec,* 2002, vol. 3, 3624-3628
- **JOHN MURPHY.** Additives for Plastics Handbook. 43-48